# FASCICULE DE BREVET EUROPEEN

(11) **EP 3 810 484 B1**
(45) Date de publication et mention de la délivrance du brevet: **23.08.2023**
(21) Numéro de dépôt: 19745663.5
(22) Date de dépôt: 03.06.2019
(51) Int. Cl.: B62D 1/181, B62D 1/183

(54) **PROCEDE POUR VEHICULE AUTONOME DE COMMANDE D'UNE COLONNE DE DIRECTION ASSURANT UNE GARDE SOUS LE VOLANT**
VERFAHREN FÜR EIN AUTONOMES FAHRZEUG ZUR STEUERUNG EINER LENKSÄULE MIT EINEM SCHUTZ UNTER DEM LENKRAD
METHOD FOR AN AUTONOMOUS VEHICLE FOR CONTROLLING A STEERING COLUMN PROVIDING A GUARD UNDER THE STEERING WHEEL

(30) Priorité: 22.06.2018 FR 1855544
(43) Date de publication de la demande: 28.04.2021
(73) Titulaire: PSA Automobiles SA, 78300 Poissy (FR)
(72) Inventeur: CAVAREC, Alan, 78350 LES LOGES EN JOSAS (FR); RONDEL, Jeremie, 78210 SAINT CYR L' ECOLE (FR); MORIZE, Franck, 92270 BOIS COLOMBES (FR)
(86) Numéro de dépôt international: PCT/FR2019/051297
(87) Numéro de publication internationale: WO 2019/243686

(56) Documents cités:
- EP-A1- 3 042 825

## Description

La présente invention concerne un procédé de commande d'une colonne de direction rétractable motorisée d'un véhicule automobile comportant un système de conduite autonome, ainsi qu'un véhicule automobile équipé de moyens mettant en oeuvre un tel procédé.

Les véhicules automobiles comportent une colonne de direction recevant à l'arrière un volant manoeuvré par le conducteur, reliée à un boîtier de direction commandant le pivotement des roues avant du véhicule.

Les colonnes de direction comportent généralement des réglages de position, en particulier en profondeur suivant l'axe de rotation de cette colonne suivant plusieurs dizaines de millimètres, par exemple de 40 à 60mm, et en hauteur, permettant d'ajuster la position du volant afin de l'adapter aux dimensions du conducteur pour assurer son confort de conduite. Ces deux réglages peuvent être motorisés par deux moteurs indépendants.

Un type de procédé de contrôle d'une colonne de direction, présenté notamment par le document CN-A-104670297, pour une colonne équipée d'une motorisation de réglage de la profondeur et d'une motorisation de réglage de la hauteur, réalise des paliers successifs de déplacements suivant ces deux directions afin de dégager l'espace d'entrée ou de sortie dans le véhicule pour faciliter ces mouvements, en particulier après un accident.

Le document EP-A1-3042825 divulgue les caractéristiques du préambule de la revendication indépendante 1 et comprend aussi deux motorisations indépendantes qui permettent de réalisant de manière automatique un mouvement de réglage de profondeur du volant suivant l'axe de cette colonne et un mouvement de réglage de hauteur du volant pour dégager l'espace du conducteur, notamment lors d'une conduite autonome.

Par ailleurs les constructeurs automobiles développent des systèmes d'assistance avancée à la conduite, appelés « ADAS » pour « Advanced Driver Assistance Systems » en langue anglaise, qui sont classifiés suivant plusieurs niveaux adaptées aux conditions de roulage, suivant le degré d'autonomie laissé au véhicule.

En particulier certains modes de roulage entraînent un déplacement automatique du volant de direction avec les deux motorisations de réglage des positions du volant, vers une position avant rétractée afin de dégager un espace pour le conducteur, laissant dans cette position au conducteur une possibilité de manoeuvrer le véhicule à tout moment avec le volant.

Toutefois en réalisant des mouvements indépendants des deux réglages du volant en profondeur et en hauteur, de manière séquentielle, on peut obtenir un problème d'espace disponible sous le volant pour les genoux du conducteur devenant insuffisant, qui pourrait occasionner des blessures ou gêner la manoeuvrabilité du véhicule avec des risques d'accidents.

La présente invention a notamment pour but d'éviter ces inconvénients de la technique antérieure.

Elle propose à cet effet un procédé de commande d'une colonne de direction comprenant deux motorisations indépendantes réalisant de manière automatique un mouvement de réglage de profondeur du volant suivant l'axe de cette colonne, et un mouvement de réglage de hauteur du volant, sur un véhicule automobile équipé de systèmes d'assistance avancés à la conduite réalisant des conduites automatiques, et d'un calculateur de gestion du véhicule délivrant des informations sur le fonctionnement de ce véhicule, ce procédé étant remarquable en ce que pour une rétractation du volant lors de conduites automatiques, il réalise simultanément une combinaison des deux mouvements du volant, suivant une trajectoire maintenant une garde de sécurité sous le volant au long de ces mouvements combinés.

Un avantage de ce procédé de commande est que la combinaison simultanée des deux mouvements de la colonne de direction suivant la trajectoire, permet de déplacer le volant à la fois vers l'avant et vers le haut en libérant un espace devant le conducteur donnant un confort, tout en préservant la sécurité grâce au contrôle de cette trajectoire qui assure la garde nécessaire pour les genoux se trouvant sous ce volant.

Le procédé selon l'invention peut comporter de plus une ou plusieurs des caractéristiques suivantes, qui peuvent être combinées entre elles.

Avantageusement, la garde de sécurité comporte une courbe formant une limite inférieure que le volant ne doit pas dépasser.

Avantageusement, en cas de rétractation le procédé limite la distance du volant avec le conducteur à une distance maximale permettant une manoeuvrabilité de ce volant par le conducteur.

Avantageusement, pour un véhicule arrêté le calculateur de gestion délivre une autorisation de rétractation du volant, et lors d'une transition de l'arrêt du véhicule vers son démarrage il délivre si le volant est rétracté une alerte qui prévient le conducteur.

Avantageusement, pour une conduite manuelle du véhicule le calculateur de gestion délivre une interdiction de rétractation du volant, pour une conduite autonome du véhicule il délivre une autorisation de rétractation du volant, et lors d'une transition de la conduite autonome vers la conduite manuelle il délivre si le volant est rétracté une alerte qui prévient le conducteur.

Avantageusement, les informations sur le fonctionnement du véhicule comportent des informations sur la voie de roulage autorisant ou pas une conduite autonome de ce véhicule.

Avantageusement, le procédé transmet les informations à un calculateur de contrôle de la colonne de direction, qui est fixé sur cette colonne.

Dans ce cas, avantageusement le calculateur de contrôle de colonne envoie des signaux au calculateur de gestion habitacle, pour lui donner l'état de la colonne de direction.

L'invention a de plus pour objet un véhicule automobile équipé de moyens mettant en oeuvre un procédé de commande comprenant l'une quelconque des caractéristiques précédentes, remarquable en ce qu'il comporte un calculateur de contrôle de la colonne de direction relié par un faisceau électrique au calculateur de gestion d'habitacle.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente un système de colonne de direction mettant en oeuvre un procédé de contrôle suivant l'invention ;
- la figure 2 est une vue de côté du conducteur assis devant la colonne de direction ; et
- la figure 3 présente des liaisons entre les principales fonctions de ce système.

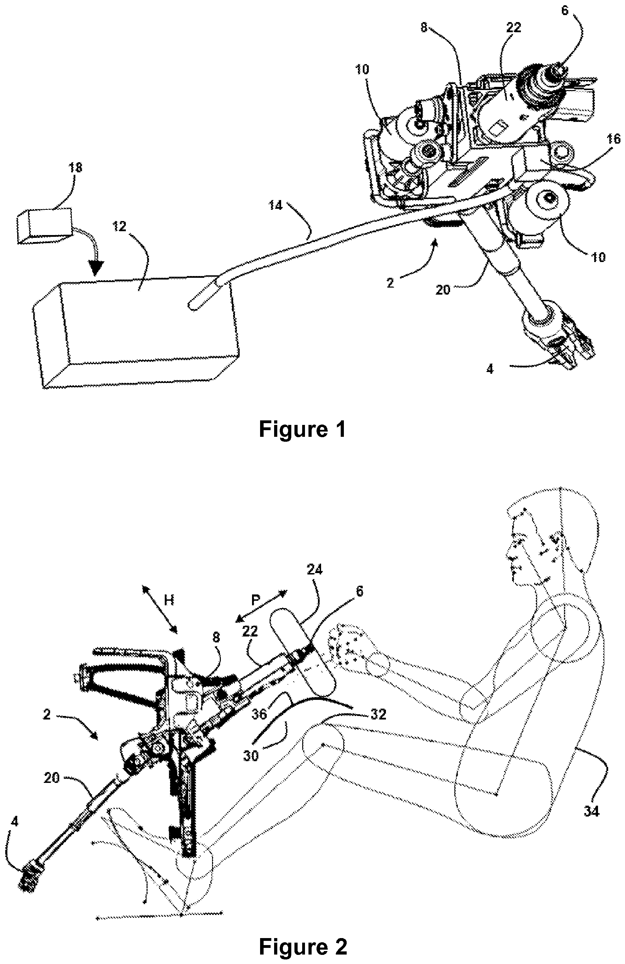

Les figures 1 et 2 présentent une colonne de direction 2 comprenant un axe en deux parties reliées entre elles par un cardan, comportant une partie avant 20 tournée vers l'avant du véhicule, se terminant par un cardan de liaison avec une crémaillère de direction 4, et une partie arrière guidée dans un fourreau 22 lié à un support 8. La partie arrière de l'axe présente une extrémité arrière 6 recevant un volant de direction 24.

Le support 8 comporte pour la conduite normale du véhicule, un premier moteur électrique 10 réglant de manière automatique la hauteur du fourreau 22 et du volant 24 suivant la direction perpendiculaire H, et un deuxième moteur électrique 10 appliquant une rétractation vers l'avant ou un déploiement vers l'arrière de la partie arrière de l'axe comprenant le volant, suivant la direction P afin d'ajuster la position axiale de ce volant suivant l'axe de cette colonne.

Un calculateur de contrôle des motorisations de colonne 16 gère les fonctionnements des moteurs électriques 10, afin d'assurer certaines fonctions comme par exemple une mémorisation des positions du volant en fonction du conducteur 34, ou des mouvements automatiques lors de l'entrée ou de la sortie du conducteur dans le véhicule.

Un faisceau électrique de liaison 14 relie le calculateur de contrôle de colonne 16 à un calculateur de gestion d'habitacle 12, appelé aussi « BSI » pour « boîtier de servitude intelligent », qui contrôle un grand nombre de fonctions relatives au fonctionnement général du véhicule, notamment un système de navigation, et différentes commandes d'équipements intérieurs de l'habitacle.

Le calculateur de gestion d'habitacle 12 reçoit des données venant de commandes du conducteur 18, ou venant de fonctions d'aide à la conduite, comprenant en particulier le système de navigation utilisant un système de positionnement par satellite.

Le calculateur de gestion d'habitacle 12 commande différentes fonctions du véhicule, comprenant en particulier des fonctions de conduite autonome comme un roulage autonome du type « ADAS » de niveau 3.

Le calculateur de contrôle de colonne 16 reçoit notamment une information de conduite autonome, lui demandant une rétractation de la colonne de direction pendant une période de conduite autonome afin de libérer de l'espace devant le conducteur.

En variante tout autre type de calculateur de fonctionnement du véhicule traitant des informations de conditions de roulage, peut être utilisé.

Une zone de sécurité 30 est définie sous le volant 24, le volant ne devant pas descendre en dessous d'une courbe 36 afin de protéger les genoux 32 du conducteur 34. La courbe 36 est définie en particulier pour chaque conducteur 34, suivant ses réglages de position de conduite comprenant le réglage du siège.

On constate qu'avec uniquement une rétractation de la colonne suivant la direction P vers l'avant, le volant 24 entrerait dans la zone de sécurité 30. Pour éviter cela il faut ajouter simultanément un mouvement suivant la direction perpendiculaire H vers le haut, pour remonter le volant 24.

Pour une période de conduite autonome décidée par le calculateur de gestion d'habitacle 12, le calculateur de contrôle de colonne 16 commande alors automatiquement un mouvement du volant 24 à la fois vers l'avant et vers le haut en pilotant les deux motorisations 10, suivant une trajectoire qui maintient une garde de sécurité au long de ces mouvements combinés, en empêchant l'entrée du volant dans la zone de sécurité 30.

On obtient ainsi un plus grand espace devant le conducteur 34 assurant le confort.

De plus la position finale du volant 24 est calculée pour permettre au conducteur 34 une certaine manoeuvrabilité du véhicule à l'aide de ce volant dans la position rétractée. En partant de la position initiale du conducteur 34, le calculateur de contrôle de colonne 16 détermine une position maximum avancée du volant 24 qui ne s'éloigne pas trop de ce conducteur, pour lui permettre de reprendre la commande de ce volant à tout moment, au moins dans des conditions minimum de sécurité.

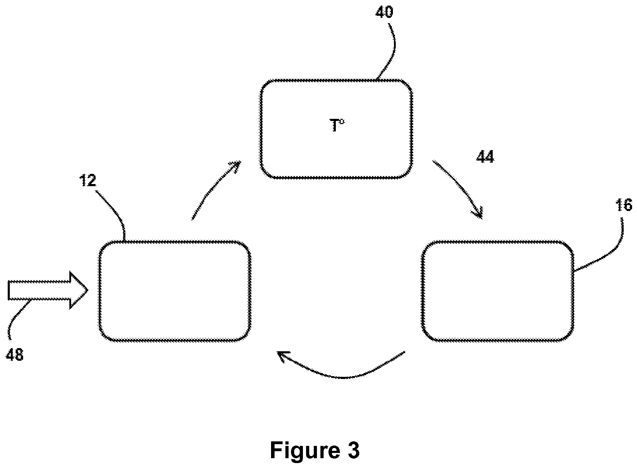

La figure 3 présente le calculateur de gestion habitacle 12 émettant différentes informations 40 sur le mode de fonctionnement du véhicule. En particulier le calculateur de gestion habitacle 12 peut être relié à un système de navigation 48 comprenant un dispositif de positionnement par satellites, qui lui donne des informations sur l'état de la route.

Les informations 40 comportent des autorisations ou interdictions de rétractation de la colonne 44, transmises au calculateur de contrôle de colonne 16 qui va effectuer la demande de rétractation seulement si une autorisation est émise, et l'empêcher si une interdiction est émise. Les informations 40 donnent aussi des alertes indiquant au conducteur que la colonne va se déployer vers l'arrière, pour éviter une surprise et assurer la sécurité.

En retour le calculateur de contrôle de colonne 16 envoie des signaux au calculateur de gestion habitacle 12, pour lui donner l'état de la colonne de direction 2 permettant de vérifier que les mouvements réalisés sont conformes aux interdictions et aux autorisations, ce qui permet d'éviter des défaillances et d'améliorer la sécurité.

En particulier on a pour un véhicule arrêté une autorisation de rétractation de la colonne, et lors d'une transition de l'arrêt du véhicule vers son démarrage l'émission d'une alerte si la colonne est rétractée, qui prévient le conducteur.

On a aussi lors d'une conduite manuelle du véhicule une interdiction de rétractation de la colonne, lors d'une conduite autonome du véhicule une autorisation de rétractation, et lors d'une transition de la conduite autonome vers la conduite manuelle une alerte si cette colonne est rétractée, qui prévient le conducteur.

Le procédé peut de plus réaliser une protection en évitant une rétractation involontaire de la colonne, lors d'une demande par erreur du conducteur pour ce mouvement agissant sur une commande de rétractation, en vérifiant si les autres conditions autorisent cette rétractation.

Le procédé peut aussi à partir d'informations sur le fonctionnement du véhicule 40 comprenant des indications sur la voie de roulage autorisant ou pas une conduite autonome de ce véhicule, provenant d'un navigateur, émettre des autorisations ou des interdictions de rétractation de la colonne.

## Revendications

1. Procédé de commande d'une colonne de direction (2) comprenant deux motorisations indépendantes (10) réalisant de manière automatique un mouvement de réglage de profondeur (P) du volant (24) suivant l'axe de cette colonne, et un mouvement de réglage de hauteur (H) du volant (24), sur un véhicule automobile équipé de systèmes d'assistance avancés à la conduite réalisant des conduites automatiques, et d'un calculateur de gestion du véhicule (12) délivrant des informations sur le fonctionnement de ce véhicule (40), **caractérisé en ce que** pour une rétractation du volant (24) lors de conduites automatiques, il réalise simultanément une combinaison des deux mouvements (H, P) du volant (24), suivant une trajectoire maintenant une garde de sécurité (30) sous le volant (24) au long de ces mouvements combinés (H, P).

2. Procédé de commande selon la revendication 1, caractérisé en ce la garde de sécurité (30) comporte une courbe (36) formant une limite inférieure que le volant (24) ne doit pas dépasser.

3. Procédé de commande selon la revendication 1 ou 2, **caractérisé en ce qu'**en cas de rétractation, il limite la distance du volant (24) avec le conducteur (34) à une distance maximale permettant une manoeuvrabilité de ce volant (24) par le conducteur (34).

4. Procédé de commande selon l'une quelconque des revendications précédentes, **caractérisé en ce que** pour un véhicule arrêté le calculateur de gestion (12) délivre une autorisation de rétractation du volant (24), et lors d'une transition de l'arrêt du véhicule vers son démarrage il délivre si le volant (24) est rétracté une alerte qui prévient le conducteur.

5. Procédé de commande selon l'une quelconque des revendications précédentes, **caractérisé en ce que** pour une conduite manuelle du véhicule le calculateur de gestion (12) délivre une interdiction de rétractation du volant (24), pour une conduite autonome du véhicule il délivre une autorisation de rétractation du volant (24), et lors d'une transition de la conduite autonome vers la conduite manuelle il délivre si le volant (24) est rétracté une alerte qui prévient le conducteur (34).

6. Procédé de commande selon l'une quelconque des revendications précédentes, **caractérisé en ce que** les informations sur le fonctionnement du véhicule (40) comportent des informations sur la voie de roulage autorisant ou pas une conduite autonome de ce véhicule.

7. Procédé de commande selon l'une quelconque des revendications précédentes, **caractérisé en ce qu'**il transmet les informations (40) à un calculateur de contrôle de la colonne de direction (16), qui est fixé sur cette colonne.

8. Procédé de commande selon la revendication 7, **caractérisé en ce que** le calculateur de contrôle de colonne (16) envoie des signaux au calculateur de gestion habitacle (12), pour lui donner l'état de la colonne de direction (2).

9. Véhicule automobile équipé de moyens mettant en oeuvre un procédé de commande selon l'une quelconque des revendications précédentes, **caractérisé en ce qu'**il comporte un calculateur de contrôle de la colonne de direction (16) relié par un faisceau électrique (14) au calculateur de gestion d'habitacle (12).

## Patentansprüche

1. Verfahren zur Steuerung einer Lenksäule (2) mit zwei unabhängigen Antrieben (10), die automatisch eine Tiefeneinstellbewegung (P) des Lenkrads (24) entlang der Achse dieser Lenksäule und eine Höheneinstellbewegung (H) des Lenkrads (24) an einem Kraftfahrzeug ausführen, das mit fortschrittlichen Fahrerassistenzsystemen ausgestattet ist, die automatische Leitungen ausführen, und mit einem Fahrzeugsteuerungsrechner (12), der Informationen über den Betrieb dieses Fahrzeugs (40) liefert, **dadurch gekennzeichnet, dass** es für ein Zurückziehen des Lenkrads (24) bei automatischen Leitungen gleichzeitig eine Kombination der beiden Bewegungen (H, P) des Lenkrads (24) entlang einer Bahn, die eine Sicherheitswache (30) unter dem Lenkrad (24) entlang dieser kombinierten Bewegungen (H, P) aufrechterhält.

2. Steuerverfahren nach Anspruch 1, **dadurch gekennzeichnet, dass** die Sicherheitswache (30) eine Kurve (36) aufweist, die eine untere Grenze bildet, die das Schwungrad (24) nicht überschreiten darf.

3. Steuerverfahren nach Anspruch 1 oder 2, **dadurch gekennzeichnet, dass** es im Falle eines Einziehens den Abstand des Lenkrads (24) vom Fahrer (34) auf einen maximalen Abstand begrenzt, der eine Manövrierbarkeit dieses Lenkrads (24) durch den Fahrer (34) ermöglicht.

4. Steuerverfahren nach einem der vorhergehenden Ansprüche, **dadurch gekennzeichnet, dass** für ein angehaltenes Fahrzeug der Steuerrechner (12) eine Freigabe zum Zurückziehen des Lenkrads (24) ausgibt, und dass er bei einem Übergang vom Anhalten des Fahrzeugs zu seinem Starten, wenn das Lenkrad (24) zurückgezogen wird, eine Warnung ausgibt, die den Fahrer warnt.

5. Steuerverfahren nach einem der vorhergehenden Ansprüche, **dadurch gekennzeichnet, dass** für eine manuelle Fahrzeugführung der Steuerrechner (12) ein Einziehverbot für das Lenkrad (24) ausgibt, für eine autonome Fahrzeugführung eine Einziehberechtigung für das Lenkrad (24) ausgibt und bei einem Übergang von der autonomen zur manuellen Fahrzeugführung eine den Fahrer (34) warnende Warnung ausgibt, wenn das Lenkrad (24) eingezogen wird.

6. Steuerverfahren nach einem der vorhergehenden Ansprüche, **dadurch gekennzeichnet, dass** die Informationen über den Betrieb des Fahrzeugs (40) Informationen über die Fahrspur umfassen, die ein autonomes Fahren dieses Fahrzeugs erlauben oder nicht erlauben.

7. Steuerverfahren nach einem der vorhergehenden Ansprüche, **dadurch gekennzeichnet, dass** es die Informationen (40) an einen Steuerrechner für die Lenksäule (16) überträgt, der an dieser Spalte befestigt ist.

8. Steuerverfahren nach Anspruch 7, **dadurch gekennzeichnet, dass** der Spaltensteuerrechner (16) Signale an den Innenraumsteuerrechner (12) sendet, um ihm den Zustand der Lenksäule (2) zu geben.

9. Kraftfahrzeug, das mit Mitteln ausgestattet ist, die ein Steuerverfahren nach einem der vorhergehenden Ansprüche anwenden, **dadurch gekennzeichnet, dass** es einen Steuerrechner für die Lenksäule (16) umfasst, der über ein elektrisches Bündel (14) mit dem Steuerrechner für den Innenraum (12) verbunden ist

## Claims

1. Method for controlling a steering column (2) comprising two independent motorizations (10) automatically performing a depth adjustment movement (P) of the steering wheel (24) along the axis of this column, and a height adjustment movement (H) of the steering wheel (24), on a motor vehicle equipped with advanced driving assistance systems performing automatic driving, and a vehicle management computer (12) delivering information on the operation of this vehicle (40), **characterized in that**, for a retraction of the steering wheel (24) during automatic driving, it simultaneously performs a combination of the two movements (H, P) of the steering wheel (24), following a trajectory maintaining a safety guard (30) under the steering wheel (24) during these combined movements (H, P).

2. Control method according to claim 1, **characterized in that** the safety guard (30) comprises a curve (36) forming a lower limit which the steering wheel (24) must not exceed.

3. Control method according to claim 1 or 2, **characterized in that**, in the event of retraction, it limits the distance of the steering wheel (24) from the driver (34) to a maximum distance allowing this steering wheel (24) to be manoeuvrable by the driver (34).

4. Control method according to any one of the preceding claims, **characterized in that**, for a stopped vehicle, the management computer (12) issues an authorization to withdraw the steering wheel (24), and during a transition from stopping the vehicle to starting it, it issues, if the steering wheel (24) is withdrawn, an alert which warns the driver.

5. Control method according to any one of the preceding claims, **characterized in that**, for manual driving of the vehicle, the management computer (12) issues a prohibition on retracting the steering wheel (24), for autonomous driving of the vehicle it issues an authorization for retracting the steering wheel (24), and, during a transition from autonomous driving to manual driving, it issues if the steering wheel (24) is retracted an alert which warns the driver (34).

6. Control method according to any one of the preceding claims, **characterized in that** the information on the operation of the vehicle (40) includes information on the taxiway allowing or not allowing autonomous driving of this vehicle.

7. Control method according to any one of the preceding claims, **characterized in that** it transmits the information (40) to a computer for controlling the steering column (16), which is fixed to this column.

8. A control method according to claim 7, **characterized in that** the column control computer (16) sends signals to the passenger compartment management computer (12) to give it the state of the steering column (2).

9. Motor vehicle equipped with means implementing a control method according to any one of the preceding claims, **characterized in that** it comprises a computer for controlling the steering column (16) connected by an electrical harness (14) to the passenger compartment management computer (12)
